(19) Europäisches Patentamt
European Patent Office
Office européen des brevets

(11) EP 3 086 932 B1

(12) FASCICULE DE BREVET EUROPEEN

(45) Date de publication et mention de la délivrance du brevet:
**07.02.2018 Bulletin 2018/06**

(21) Numéro de dépôt: **14828243.7**

(22) Date de dépôt: **18.12.2014**

(51) Int Cl.:
***B29D 30/54*** (2006.01)

(86) Numéro de dépôt international:
**PCT/FR2014/053412**

(87) Numéro de publication internationale:
**WO 2015/097372 (02.07.2015 Gazette 2015/26)**

(54) **PROCÉDÉ DE RECHAPAGE D'UNE ENVELOPPE DE PNEUMATIQUE**

VERFAHREN ZUR REIFENRUNDERNEUERUNG

METHOD FOR TYRE RETREADING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363447**

(43) Date de publication de la demande:
**02.11.2016 Bulletin 2016/44**

(73) Titulaire: **Compagnie Générale des Etablissements Michelin**
**63000 Clermont-Ferrand (FR)**

(72) Inventeurs:
• **ASTIER, Cédric**
**F-63040 Clermont-Ferrand Cedex 9 (FR)**
• **MARCET, Grégory**
**F-63040 Clermont-Ferrand Cedex 9 (FR)**

(74) Mandataire: **Noel, Luminita**
**M. F. P. MICHELIN**
**23 place des Carmes-Déchaux**
**SGD/LG/PI - F35 - Ladoux**
**63040 Clermont-Ferrand Cedex 9 (FR)**

(56) Documents cités:
**GB-A- 2 210 001        US-A- 3 925 129**
**US-A- 4 098 936        US-A- 4 588 460**
**US-A- 5 053 094**

**Description**

L'invention concerne le rechapage des pneumatiques.

L'opération de rechapage consiste classiquement à éliminer la bande de roulement usée d'une enveloppe de pneumatique pour la remplacer par une bande de roulement neuve. A cette fin, il est connu de doter le pneumatique d'une couche de liaison en matériau thermofusible liant la bande de roulement à la carcasse. En vue du rechapage, on applique cette couche sur une carcasse de pneumatique. On pose ensuite une bande de roulement compatible avec une utilisation sur une roue. On chauffe ensuite cette couche jusqu'à une température prédéterminée caractéristique du matériau, puis on laisse refroidir. En refroidissant, la couche assure l'adhérence de la bande à la carcasse. L'opération de chauffage peut être effectuée avant assemblage, par exemple par infrarouge ou par convection forcée, ou après assemblage, par exemple par conduction de contact, conduction électrique, convection forcée, induction à haute fréquence ou micro-ondes.

Lors du chauffage, on doit appliquer une pression sur la bande de roulement pour la plaquer contre la carcasse. Ce moyen de pression doit être compatible avec le moyen de chauffage retenu, c'est-à-dire ne pas nuire à la conduction ou à la convection du flux thermique ou à une quelconque connectique qui sortirait d'un moyen de chauffage intégré au pneumatique, ou encore doit être transparent au rayonnement électromagnétique, à l'induction hautes fréquences ou aux micro-ondes.

Dans le domaine du rechapage est bien connue l'utilisation d'une ou plusieurs bandelettes tendues sur la bande de roulement appliquée sur la carcasse à rechaper. Le but des dites bandelettes est d'appliquer une pression sur la bande de roulement pour la plaquer contre la carcasse.

Selon le document US 4588460 - A, seulement une bandelette de tension placée en position centrale est utilisée.

Selon les documents US 5053094 - A, US 3925129 - A, US 4098936 - A et GB 2210001 - A, on utilise deux bandelettes (ou deux fils métalliques) de tension placées en positions symétriques aux cotés de la bande de roulement. L'invention a pour but d'améliorer l'application de la pression sur la bande de roulement.

A cet effet, on prévoit selon l'invention un procédé de rechapage d'une enveloppe de pneumatique comme défini dans la revendication 1, dans lequel procédé :

- on dispose une bande de roulement sur une carcasse d'enveloppe en interposant une couche de liaison entre celles-ci, et
- on tend une bandelette sur plusieurs tours sur la bande de roulement.

Ainsi, la tension de la bandelette crée une pression qui plaque la bande de roulement sur la carcasse et la couche de liaison. Aussi, la bandelette applique une pression homogène sur toute la surface externe de la bande de roulement. Le procédé est multidimensionnel puisque la bandelette s'adapte à tout type de bande de roulement.

Des formes préférentielles de l'invention sont définies dans les revendications dépendantes.

Dans un mode de réalisation, préalablement à la tension de la bandelette, on gonfle la carcasse.

Ainsi, l'action conjointe de la pression engendrée par le gonflage et de la pression engendrée par la tension de la bandelette permet le plaquage l'un contre l'autre de la carcasse et de la bande de roulement. Il convient de gonfler la carcasse à une pression suffisamment élevée. Avec un gonflage à pression faible, par exemple entre 0,5 et 1 bar, soit entre 50 000 et 100 000 Pa, le sommet de l'enveloppe a tendance à flamber localement et aléatoirement, ce qui engendre des inhomogénéités de tension. En gonflant la carcasse à une pression supérieure à 2 bar, soit 200 000 Pa, aucun flambement n'apparaît.

Avantageusement, on applique la bandelette en un premier tour sur la bande de roulement sans tendre la bandelette.

Ce premier tour qui forme donc un tour « mort » constitue un moyen simple d'ancrer la bandelette sur la bande de roulement et permet ainsi de figer la position de la bande et d'éviter tout risque de glissement une fois que la bandelette est mise sous tension.

De préférence, les tours ou au moins deux des tours sont jointifs.

Ainsi, la pression appliquée par la bandelette sous tension sur la bande de roulement est particulièrement homogène.

Selon un mode de réalisation, on enroule la bandelette en plusieurs tours jointifs et en une seule couche.

Grâce au caractère jointif des tours, on génère une pression non nulle en tout point de la couche de liaison lors de la tension de la bandelette. Cela permet en outre de rendre la pression appliquée par la bandelette homogène sur la bande de roulement.

Selon un autre mode de réalisation, on enroule la bandelette en au moins deux couches superposées, et de préférence en au moins trois couches.

On accroit ainsi l'homogénéité de la pression appliquée par la bandelette sur la bande de roulement.

Avantageusement, chaque couche comprend plusieurs tours et les tours sont décalés d'une couche à une autre.

Cette configuration permet d'homogénéiser davantage encore la pression appliquée par la bandelette sur la bande de roulement.

De préférence, on chauffe la couche de liaison.

Le chauffage permet ainsi la fusion de cette couche. La couche crée l'adhérence de la bande de roulement à la carcasse une fois qu'elle a refroidi à température ambiante.

De préférence, on retire ensuite la bandelette.

L'enveloppe de pneumatique est alors prête à être montée sur une roue. Avantageusement, la bandelette est inextensible suivant sa longueur.

De préférence, la bandelette comprend un matériau thermorétractable.

Ainsi, on maximise la pression appliquée par la bandelette sur la bande de roulement pour une tension de la bandelette donnée, notamment pendant le chauffage de la couche de liaison.

Il peut s'agir notamment de câbles thermorétractants, par exemple en nylon. La thermorétractabilité de ces câbles compense les effets de relaxation du module du matériau qui compose la bandelette, ainsi que de tout le sommet du pneumatique, du fait du chauffage de l'ensemble. Il est préférable de tenir compte de cet effet de compensation pour calibrer correctement la tension de pose de la bandelette. Ceci peut être réalisé suite à des mesures de pression, par exemple au niveau de la couche de liaison pendant la phase de chauffage.

Avantageusement, la bandelette comprend des câbles.

Avantageusement, la matrice qui relie tous ces câbles est de la gomme cuite ou vulcanisée.

Cette matrice est relativement molle et permet une adaptation de la bandelette au profil de chaque sculpture, soit par écartement des câbles, soit par cisaillement local de la matrice pour permettre des développements locaux des câbles légèrement différents pour que ceux-ci puissent mieux se plaquer contre les sculptures.

On prévoit également une enveloppe de pneumatique qui a fait l'objet d'un procédé de rechapage selon l'invention.

Nous allons maintenant présenter un mode de réalisation de l'invention à l'appui des dessins annexés sur lesquels :

- la figure 1 est une vue en perspective d'une enveloppe de pneumatique faisant l'objet d'un procédé selon un mode de réalisation de l'invention ;
- les figures 2 et 3 sont des vues en coupe radiale de l'enveloppe de la figure 1 à différents stades du procédé ; et
- La figure 4 est un graphique illustrant l'homogénéité de la pression appliquée par la bandelette sous tension suivant le nombre de couches qu'elle forme.

Nous allons décrire un mode de mise en oeuvre de l'invention, qui consiste à rechaper une enveloppe de pneumatique de roue.

Préalablement à cette mise en oeuvre, on dispose d'une enveloppe de pneumatique comprenant une carcasse et une bande de roulement. Lorsque cette dernière est usagée, il est nécessaire de l'ôter avant d'installer une bande de roulement neuve. Dans le cas où l'enveloppe est dotée d'une couche de liaison comprenant un matériau thermofusible, on chauffe la couche jusqu'à sa fusion, qui perd ainsi son pouvoir d'adhérence. On peut alors agripper la bande et la séparer intégralement du reste de l'enveloppe par pelage.

La carcasse nue fait ensuite l'objet du procédé de rechapage.

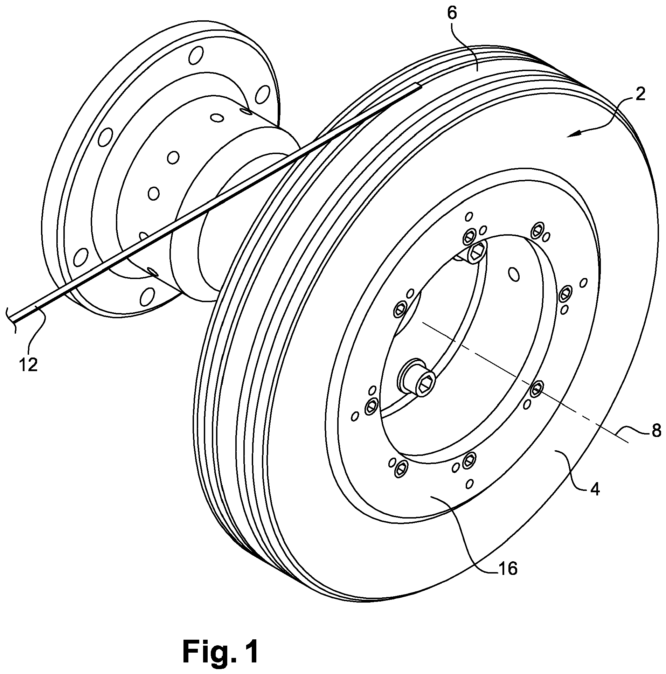

Pour cela, en référence aux figures 1 à 3, on installe une bande de roulement 6 en anneau sur une carcasse 4, du côté de celle-ci le plus éloigné d'un axe principal 8 de la carcasse. L'enveloppe 2 ainsi formée comprend également une couche de liaison 10 interposée suivant la direction radiale à l'axe 8 entre la carcasse et la bande de roulement. En l'espèce, il s'agit d'une couche réalisée dans un matériau thermofusible connu en lui-même. Par matériau thermofusible, on comprend un matériau apte à se ramollir lorsqu'il est chauffé pour le porter à une température prédéterminée caractéristique du matériau, dite température de ramollissement. Par exemple, un tel matériau peut être choisi parmi les élastomères thermoplastiques tels que le SBS (styrène-butadiène-styrène) ou le SIS (styrène-isoprène-styrène). Pour les besoins de l'invention, on se réfère à un matériau thermofusible capable de ramollir à une température comprise entre 140°C et 200°C.

De plus, on monte la carcasse sur une jante 16 et on la gonfle à une pression supérieure à 2 bar, soit 200 000 Pa. Cette pression reste constante tant que dure ce gonflage.

On commence le bobinage d'une bandelette 12 sur la bande de roulement en effectuant un premier tour mort au niveau d'un des sillons des sculptures de la bande sans tendre la bandelette.

A titre d'exemple, on peut utiliser une bandelette de type « renfort à zéro degré », c'est-à-dire une bandelette formée par un ensemble de câbles sensiblement parallèles entre eux, en aramide de largeur Légale à 10 millimètres.

On peut alors ensuite appliquer une tension sur la bandelette pour figer la position de la bande de roulement par rapport à la carcasse. La pression à laquelle on a gonflé la carcasse permet à l'enveloppe de résister à la tension appliquée par la bandelette et d'éviter tout glissement de la carcasse sur la jante. En notant L la largeur de la bandelette, R le rayon extérieur de la bande de roulement, F l'effort appliqué à la bandelette pour la maintenir sous tension régulée et P la pression exercée par la bandelette sur la bande de roulement, la théorie donne le rapport entre F et P :

$$F = P \times R \times L$$

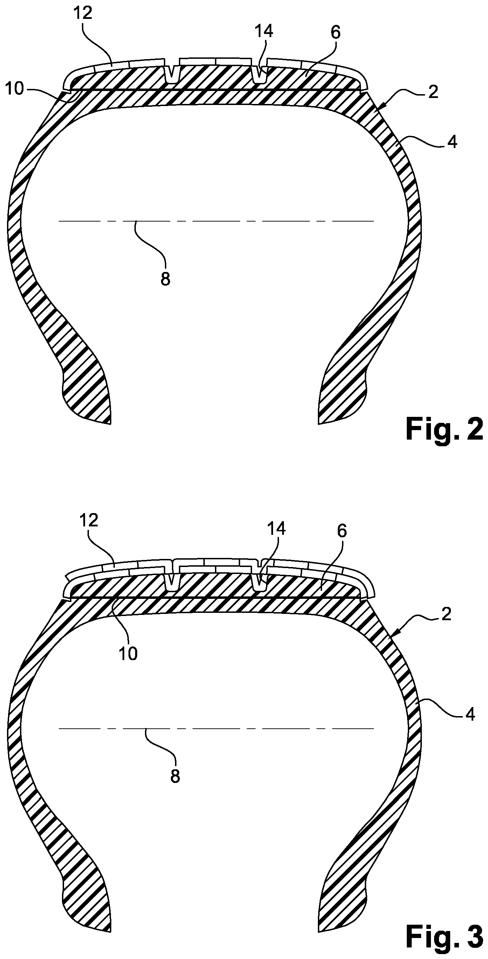

Si on se réfère la figure 3 où on note le nombre de couche *n*, on déterminera la tension F à appliquer à la bandelette à l'aide de la formule suivante :

$$F = P \times R \times L/n,$$

Deux cas peuvent se présenter.

Dans le premier, les câbles de la bandelette ne sont pas thermorétractants (c'est-à-dire sensibles thermiquement). On applique la formule ci-dessus en tenant compte d'un surplus de tension pour compenser la relaxation du module de la bande de roulement pour toujours assurer une pression minimale au niveau du plan de joint de la couche de liaison. Ce surplus est déterminé suite à des essais avec mesure de la pression au niveau de la couche de liaison lors de l'assemblage par chauffage ou par calcul en tenant compte de l'évolution du module de la bande de roulement en fonction de la température. Dans le deuxième cas, les câbles sont thermorétractants. La force de contraction des câbles de la bandelette sera déterminée de telle sorte qu'elle compense la relaxation des produits en gomme de tout le sommet du pneumatique et du module de la bandelette elle-même pour toujours assurer une pression minimale au niveau du plan de joint de la couche de liaison. Cette force de contraction sera déterminée suite à des essais avec mesure de la pression au niveau de la couche de liaison lors de l'assemblage par chauffage ou par calcul en tenant compte de l'évolution du module de la bande de roulement en fonction de la température et de la force de contraction qui évolue en fonction de la température.

Si la bandelette contient des câbles thermorétractants et non thermorétaractants (par exemple : 66% en aramide et 33% en nylon), le problème est plus complexe, et seuls des essais avec mesure de la pression au niveau du plan de joint permettront de déterminer la tension F.

En référence aux figures 2 et 3, on enroule la bandelette sur plusieurs tours, de préférence jointifs de manière à ce qu'elle couvre l'intégralité de la surface externe de la bande de roulement. La bandelette constitue ainsi une première couche sous tension sur la bande de roulement.

A la suite de cette première couche, on bobine la bandelette sur une deuxième couche par dessus la première en faisant en sorte que les tours de la deuxième couche soient décalés par rapport aux tours de la couche précédente. Préférentiellement, on répète cette opération une autre fois de manière à ce que trois couches superposées couvrent la bande de roulement.

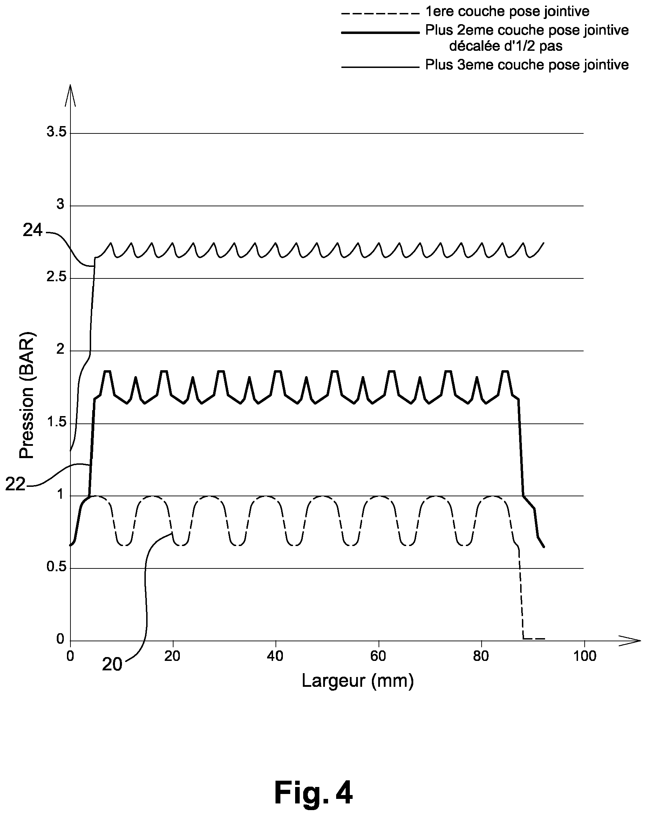

La figure 4 illustre en ordonnée la répartition de la pression engendrée par la tension de la bandelette sur la bande de roulement couche après couche. La première courbe 20 donne cette répartition après l'enroulement de la première couche. On remarque qu'elle est hétérogène sur la largeur de la bande de roulement et varie entre 0,6 et 1 bar, soit 60 000 et 100 000 Pa. Plus précisément, la pression appliquée au niveau des sillons est inférieure à celle appliquée en dehors des sillons. Ces hétérogénéités sont aussi présentes sur la seconde courbe 22, c'est-à-dire après l'enroulement d'une seconde couche, mais elles sont d'amplitude moindre puisque la pression varie entre 1,7 et 1,9 bar, soit 170 000 et 190 000 Pa. Après l'enroulement d'une troisième couche, on voit sur la troisième courbe 24 que la répartition de la pression est quasiment homogène, la valeur de la pression étant d'environ 2,65 bar, soit 265 000 Pa, sur toute la largeur de la bande de roulement. Ces courbes ont été réalisées en appliquant un effort F environ égal à 250 N pour mettre sous tension la bandelette, pour un pneumatique de dimensions 115 85 R12.

Les courbes 20 à 24 illustrent bien le fait que les tours jointifs de la bandelette et les sculptures de la bande de roulement sont à l'origine des hétérogénéités de pression lors de la pose de la première couche. En particulier, la pression appliquée serait parfaitement homogène si la bande était plate, mais son galbe fait que la pression est plus importante au centre qu'aux extrémités. La répartition de la pression s'homogénéise dès la pose de la deuxième couche, et devient quasiment homogène après la pose de la troisième couche.

La bande de roulement et la carcasse sont alors fermement plaquées l'une contre l'autre.

On chauffe alors la couche de liaison dans le but de la faire fondre ou de la ramollir. Pour ce faire, on peut chauffer l'enveloppe dans sa totalité, par exemple dans une étuve à 150°C pendant une heure. Si la bandelette comprend un matériau thermorétractable, elle applique une pression accrue sur la bande de roulement durant le chauffage. On peut aussi chauffer localement la couche de liaison. On peut faire le chauffage par micro-ondes ou bien à l'aide d'une nappe de chauffage alimentée électriquement (effet Joule) préalablement installée au contact de la couche.

Une fois que la couche de liaison a fondu, on la laisse refroidir jusqu'à une température inférieure à sa température de fusion. La couche se solidifie alors, et crée l'adhérence de la bande de roulement à la carcasse.

On retire ensuite la bandelette. L'enveloppe peut alors être montée sur une roue.

Bien entendu, on pourra apporter à l'invention de nombreuses modifications sans sortir du cadre de celle-ci.

La bandelette peut être constituée d'un matériau autre que l'aramide et présenter d'autres dimensions.

La couche de liaison peut être une gomme de liaison, auquel cas il n'est pas nécessaire de la faire refroidir après qu'elle a été chauffée en vue du rechapage.

## Revendications

1. Procédé de rechapage d'une enveloppe (2) de pneumatique, **caractérisé en ce que** :

    - on dispose une bande de roulement (6) sur une carcasse (4) d'enveloppe en interposant une couche de liaison (10) entre celles-ci, et
- on tend une bandelette (12) sur plusieurs tours sur la bande de roulement.

**2.** Procédé selon la revendication précédente, dans lequel, préalablement à la tension de la bandelette, on gonfle la carcasse.

**3.** Procédé selon au moins l'une quelconque des revendications précédentes, dans lequel on applique la bandelette en un premier tour sur la bande de roulement sans tendre la bandelette.

**4.** Procédé selon au moins l'une quelconque des revendications précédentes, dans lequel les tours ou au moins deux des tours sont jointifs.

**5.** Procédé selon au moins l'une quelconque des revendications précédentes, dans lequel on enroule la bandelette en au moins deux couches superposées, et de préférence en au moins trois couches.

**6.** Procédé selon la revendication précédente, dans lequel chaque couche comprend plusieurs tours et les tours sont décalés d'une couche à une autre.

**7.** Procédé selon au moins l'une quelconque des revendications précédentes, dans lequel on chauffe la couche de liaison.

**8.** Procédé selon au moins l'une quelconque des revendications précédentes, dans lequel on retire la bandelette.

**9.** Procédé selon au moins l'une quelconque des revendications précédentes, dans lequel la bandelette est inextensible suivant sa longueur.

**10.** Procédé selon au moins l'une quelconque des revendications précédentes, dans lequel la bandelette comprend un matériau thermorétractable.

**11.** Procédé selon au moins l'une quelconque des revendications précédentes, dans lequel la bandelette comprend des câbles.

**Patentansprüche**

**1.** Verfahren zur Runderneuerung eines Reifenmantels (2), **dadurch gekennzeichnet, dass**:

- eine Lauffläche (6) auf einer Karkasse (4) des Mantels durch Dazwischensetzen einer Verbindungslage (10) zwischen ihnen angeordnet wird, und
- ein Streifen (12) über mehrere Umrundungen auf die Lauffläche gespannt wird.

**2.** Verfahren nach dem vorhergehenden Anspruch, bei dem vor dem Spannen des Streifens die Karkasse aufgepumpt wird.

**3.** Verfahren nach mindestens einem der vorhergehenden Ansprüche, bei dem der Streifen in einer ersten Umrundung auf die Lauffläche aufgebracht wird, ohne den Streifen zu spannen.

**4.** Verfahren nach mindestens einem der vorhergehenden Ansprüche, bei dem die Umrundungen oder mindestens zwei der Umrundungen aneinandergesetzt sind.

**5.** Verfahren nach mindestens einem der vorhergehenden Ansprüche, bei dem der Streifen in mindestens zwei übereinanderliegende Lagen, und vorzugsweise mindestens drei Lagen, gewickelt wird.

**6.** Verfahren nach dem vorhergehenden Anspruch, bei dem jede Lage mehrere Umrundungen umfasst und die Umrundungen von einer Lage zur anderen versetzt sind.

**7.** Verfahren nach mindestens einem der vorhergehenden Ansprüche, bei dem die Verbindungslage erhitzt wird.

**8.** Verfahren nach mindestens einem der vorhergehenden Ansprüche, bei dem der Streifen abgezogen wird.

**9.** Verfahren nach mindestens einem der vorhergehenden Ansprüche, bei dem der Streifen in seiner Länge undehnbar ist.

**10.** Verfahren nach mindestens einem der vorhergehenden Ansprüche, bei dem der Streifen ein wärmeschrumpfbares Material umfasst.

**11.** Verfahren nach mindestens einem der vorhergehenden Ansprüche, bei dem der Streifen Korde umfasst.

**Claims**

**1.** Method for retreading a tyre casing (2), **characterized in that**:

- a tread (6) is disposed on a casing carcass (4) with a bonding layer (10) being interposed in between, and
- a strip (12) is tensioned through several circuits on the tread.

**2.** Method according to the preceding claim, wherein, before the strip is tensioned, the carcass is inflated.

**3.** Method according to at least either one of the preceding claims, wherein the strip is applied to the tread in a first circuit without the strip being tensioned.

**4.** Method according to at least any one of the preceding claims, wherein the circuits or at least two of the circuits are contiguous.

**5.** Method according to at least any one of the preceding claims, wherein the strip is wrapped in at least two superposed layers, preferably in at least three layers.

**6.** Method according to the preceding claim, wherein each layer comprises several circuits and the circuits are offset from one layer to another.

**7.** Method according to at least any one of the preceding claims, wherein the bonding layer is heated.

**8.** Method according to at least any one of the preceding claims, wherein the strip is removed.

**9.** Method according to at least any one of the preceding claims, wherein the strip is inextensible along its length.

**10.** Method according to at least any one of the preceding claims, wherein the strip comprises a heat-shrinkable material.

**11.** Method according to at least any one of the preceding claims, wherein the strip comprises cables.

**Fig. 1**

**Fig. 2**

**Fig. 3**

Fig. 4

EP 3 086 932 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4588460 A
- US 5053094 A
- US 3925129 A
- US 4098936 A
- GB 2210001 A